# EUROPEAN PATENT SPECIFICATION

(11) **EP 1 176 506 B1**
(45) Date of publication and mention of the grant of the patent: **12.12.2007**
(21) Application number: 00116036.5
(22) Date of filing: 26.07.2000
(51) Int. Cl.: G06F 9/46, H04L 12/24

(54) **Discovering local networked resources**
Verfahren zur Entdeckung von lokalen Netzwerkressourcen
Procédé pour découvrir ressources locales dans un réseau

(43) Date of publication of application: 30.01.2002
(73) Proprietor: Sony Deutschland GmbH, 10785 Berlin (DE)
(72) Inventor: Mandato, Davide, c/o Advanced Tech. Ct. Stuttgart, 70327 Stuttgart (DE); Kovacs, Ernö, c/o Advanced Tech. Ct. Stuttgart, 70327 Stuttgart (DE)
(74) Representative: Rupp, Christian

(56) References cited:
- WO-A-99/09658
- TEPPO KURKI: " Jini- An environment for Spontaneous Federatoin of Networked Services" PUB. TCM, January 1999 (1999-01), XP002141073
- K. F. EUSTICE, T. J. LEHMAN, A. MORALES, M. C. MUNSON, S. EDLUND, M. GUILLEN: "A universal information appliance " IBM SYSTEM JOURNAL, [Online] vol. 38, no. 4, 1999, pages 575-601, XP002157988 Retrieved from the Internet: <URL:http://www.research.ibm.com/journal/s j/384/eustice.html> [retrieved on 2001-01-18]
- HODES T D ET AL: "COMPOSABLE AD HOC LOCATION-BASED SERVICES FOR HETEROGENEOUS MOBILE CLIENTS" WIRELESS NETWORKS,ACM,US, vol. 5, no. 5, October 1999 (1999-10), pages 411-427, XP000902495 ISSN: 1022-0038
- " Jini (TM) Architectural Overview" SUN MICROSYSTEMS TECHNICAL WHITE PAPER, [Online] January 1999 (1999-01), pages 1-23, XP002152110 Retrieved from the Internet: <URL:http://www.sun.com/jini/whitepapers/a rchitecture.html> [retrieved on 2001-01-18]
- "Jini (TM) Discovery and Join Specification" SUN MICROSYSTEMS TECHNICAL WHITE PAPER, 25 January 1999 (1999-01-25), pages 1-36, XP002154096
- P. FARJAMI, C. GORG, F. BELL: "Advanced service provisioning based on mobile agents" COMPUTER COMMUNICATIONS, ELSEVIER, NETHERLANDS , vol. 23, no. 8, 1 April 2000 (2000-04-01), pages 754-760, XP004192595

## Description

The present invention relates to a method discovering local resources of a network, to a software program product for implementing such a method as well as to a entry gateway server for informing on local network resources.

The invention hereby presented generally relates to the field of mobile multimedia middle-ware, computer networking, distributed processing systems, databases, handheld computers, and wireless communication.

This invention consists of a method and a suite of units for conveniently leveraging available telecommunication and/or multimedia resources, by properly managing User Profile information in the Unified Instant Messaging system.

More specifically, this method takes into account the *mutable* characteristics of the *environment* where subscribers' devices are operating. Subscribers can have their personal User Profiles updated not only in response to location and/or situation changes, but also to get advantage of any networked telecommunication and/or multimedia resource available in the surroundings (see the concepts of Mobile Ad-Hoe Networking).

The IMB (Instant Message Broker) system is an example for an application of this invention. Another application might include for example Video Conferencing, where the hereby-presented invention could enable the user to gain access to the required equipment, available in the surroundings.

The IMB service goal is to deliver information as messages sent by a service subscriber to another, based on instructions provided by the latter. These instructions are stored within the *IMB* system - which implements the IMB service - and are used for steering the IMB system to select a Called Party's *preferred* terminal device. Once selected, the IMB System uses such terminal device for delivering the Calling Party's information to the Called Party. The Called Party has also the possibility to receive copies of a given incoming message onto other terminal devices.

Given that the type of Called Party's terminal device may differ from the Calling Party's one, the IMB system may be required to undertake proper message format conversion. This information processing can even be further enhanced with additional functionality, such as adding pay-per-view content to the original information.

EP 1 130 869 in the name of Sony International (Europe) GmbH filed on March 1, 2000 discloses a technique for the management of user profile data on the basis of a messaging system.

Document "Jin i - An environment for spontaneous federation of networked services", Teppo Kurki, January 1999, presents the JINI system, which allows for computing devices to discover other devices or services available on a network. So-called JINI-enabled devices are able to announce the services they provide so that other devices on the network may look at those services and use them. In the network, a lookup service is responsible for keeping track of services available on the network and for arranging said services into groupes. The lookup service contains in an internal database a list of service interfaces that are available on the network for any client. After having discovered the lookup service, a client device may query said lookup service for services of a certain type. The lookup service searches its internal database for finding matches to the client query and returns corresponding objects to the client.

Document "Jini (TM) architecture overview", Sun microsystems technical white paper, January 1999, describes that in the JINI-system the lookup service can also store a user interface for a service. Accordingly, a client is able to manipulate a service directly via said user interface stored in the lookup service.

Document "A universal information appliance", Eustice et al., 1999, describes a method for a personal device to interact with applications of a network or access information store located in a network.

WO 99/09658 A describes a system providing web authoring, website management and communication software technology, including services like email management or document printing. All services are accessed and run via the internet and the whole system resides entirely on an internet web server site.

Document "Composable ad hoc location-based services for heterogeneous mobile clients", Hodes et al., October 1999, discloses a system comprising a service interaction proxy (SIP), a service interaction client (SIC) and a beaconing daemon. When a client enters a cell or network, it receives a broadcast signal sent by the beaconing daemon and registers with the base station of the cell. The client can request the meta-service called "index" that returns a list of the services available. Based on the contents of the reply, the client renders labelled user interface buttons for unknown services, executes scripts in a database to allow for locale-specific reconfiguration and tells the local service interaction proxy to remap the location of running services and to set up any necessary widget binding remappings.

The object of the present invention is to propose a possibility to leverage (mobile) ad-hoc networks and to discover local network resources. A further object of the present invention is to propose a technique for an integration of such networks in an instant messaging system.

Said object is achieved by means of the features of the independent claims. The dependent claims develop further the central idea of the present invention.

According to the present invention therefore a method for discovering local resources of a network is proposed. At least one predefined template is provided for at least one node of a network. The template is a predefined information on a logical grouping of front-ends offered to the user (in the local environment of the node). Finally, the template is transmitted from the node to a user device.

The template can be customized by the user.

The template can particularly be customized by adding, deleting and/or modifying front-ends and/or front-end descriptions (specifications).

The template can be stored in a central user profile database of a network and/or cached locally in the user's device.

The locally cached customized templates can be synchronized templates stored on the central user profile database.

The template is specific for a given service (e.g. IMB) and contains information on the use of locally available resource.

The template can contain information on locally available front-ends which may even not been able to participate in a direct resource discovery process with a user terminal.

The templates can be offered by an entry gateway server of a message transmission service.

The node can send automatically a notification to the user's device in case front-ends of a template are modified.

According to a further aspect of the present invention a software program product for implementing a method as set forth above is proposed.

According to a still further aspect of the present invention an entry gateway server for the information on local network resources is provided.

Further features, objects and advantages of the present invention will become evident for the man skilled in the art when reading the following detailed description of embodiments taken in conjunction with the figures of the enclosed drawings.
Figure 1 shows a general view of a mutable environment of a messaging system,
Figure 2 shows the relationships among information elements (in the form of a simplified UML class diagram),
Figure 3 shows possible scenarios in the form of a SDL diagram,
Figure 4 shows the system architecture of the present invention,
Figure 5 shows the data flow among visitor front-end, entry gateway server (EGS) and a home IMB system,
Figure 6 shows the data flow among the visitor front-end, the entry gateway server, the home IMB system and a visitor IMB system,
Figure 7 shows an automatic mode of a HIS support scenario in the form of a simplified UML message sequence diagram,
Figure 8 shown the manual mode of a HIS support scenario in form of a simplified UML message sequence diagram,
Figure 9 shows the manual mode with customization of a HIS support scenario in the form of a simplified UML message sequence diagram, and
Figure 10 shows an arbitrated mode of an HIS support scenario in form of a simplified UML message sequence diagram.

| | |
|---|---|
| ACM | Ad-Hoc Computing Manager |
| AV | Audio/Video |
| DDM | Device Discovery Manager |
| EGS | Entry Gateway Service |
| EGSS | Entry Gateway Service Server |
| EGSC - | Entry Gateway Service Client |
| FS | Front-End Set |
| FST | Front-End Set Template |
| HIS | Home IMB System |
| HW | Hardware |
| GUI | Graphical User Interface |
| IMB | Instant Message Broker |
| EP | Internet Protocol |
| LM | Location Manager |
| MASE | Mobile Application Support Environment |
| ODP | Open Distributed Processing |
| OSGi | Open Services Gateway Initiative |
| PDA | Personal Data Assistant |
| SDM | Service Discovery Manager |
| SW | Software |
| UIM | Unified Instant Messaging |
| UML | Unified Modeling Language |
| VDM | Virtual Device Manager |
| VF | Virtual Front-End |
| VFS | Virtual Front-End Set |
| VIS | Visitor IMB System |

IMB subscribers may need to be contacted anywhere, insofar as they can travel (i.e. being reachable at different locations/offices), and/or they can reconfigure their set of available terminal devices at any given time.

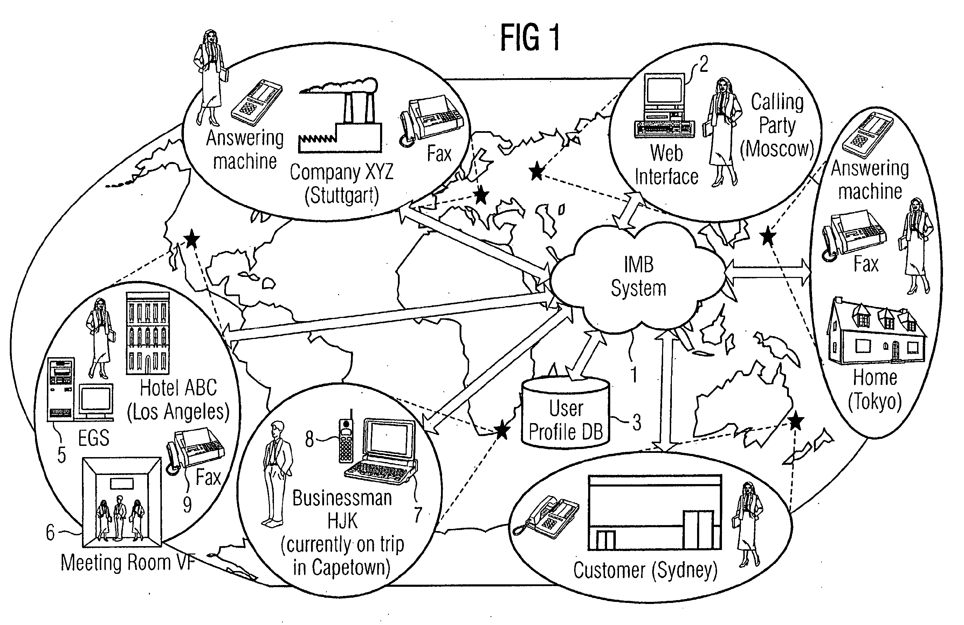

Figure 1 illustrates the simplest case of a global unique IMB system 1 (i.e. no distinction between HIS and VIS is required).

A Calling Party located in Moscow tries to send an Instant Message to the businessman HJK (i.e. the Called Party), by connecting to the IMB System 1 through a web interface 2 (by using a PC with an Internet access). The Calling Party does not know where the businessman is currently located. All the Calling Party knows about the Called Party is the businessman's IMB subscriber name (e.g. imb://HJK@sony.de).

Based on the information stored in the (global) User Profile Database 3, the IMB System resolves the businessman's (i) Active FS and (ii) the current terminal device.

Once got such information, the IMB System can finally forward the Instant Message (with the proper data format, as prescribed by the selected terminal device) to the Called Party.

The Called Party can move to different locations (e.g. he can be at Company XYZ in Stuttgart), and or to different situations (*on trip -* he can use only a mobile phone and a laptop - *or at home*). As a special case, the hotel ABC in Los Angeles can become a new *home* for the businessman, for a certain period of time. In such a case, the Hotel will publish on an EGS 5 (which might be either private or public) the FST describing the set of Front-Ends the Hotel intends to offer to its customers as a premium service.

The businessman can thus discover on the spot this opportunity and can then decide whether and how to use it. For example, the businessman can reserve the multimedia Meeting Room 6 offered by the Hotel ABC, where the businessman can make use of an existing overhead projector, a microphone, and loudspeakers. The businessman can thus bring into the room his laptop 7,and automatically connect to the set of aforementioned peripherals, in order to deliver an AV presentation.

The EGS 5 has thus prepared the environment, by pre-assembling a virtual device, through which the various peripherals (assumed in this example as wirelessly networked, e.g. through Bluetooth radio links) can be controlled as a whole. The businessman can thus use his Visitor Front-End (e.g. his laptop 7) for contacting the EGS 5, so as to reserve the VF and use it.

In order to do so, the businessman must however customize the FST published by the Hotel's EGS 5, by including in the FST the information about his laptop 7. In the meanwhile the businessman would like to be reachable (through the IMB system 1) on his mobile phone 8 and not to receive Instant Messages at the Hotel's published Fax machine 9 (e.g. for privacy reasons). In order to do so, he has to further customize the FST by adding his mobile phone 8, and removing the Hotel's fax machine 9.

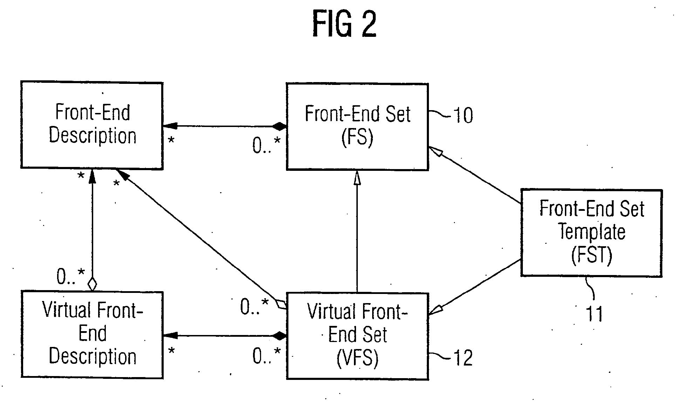

Following are explained in detail the key concepts of this invention (see *Figure 2*).

| **Concept Name** | **Concept Definition** |
|---|---|
| **Entry Gateway Service (EGS) (5 in Figure 1)** | A networked service publishing information regarding networked telecommunication and/or multimedia resources that might be available in its surroundings. |
| **Front-End** | A HW/SW unit providing IMB subscribers with a (possibly Graphical) User Interface for receiving Instant Messages and perform some IMB account management operations. |
| **Visitor Front-End** | Roaming IMB subscribers might access the EGS from a private Front-End, most likely a portable device like a mobile phone or a PDA. At any given time, IMB subscribers may take advantage of zero, one, or many Visitor Front-Ends. |
| **Virtual Front-End (VF)** | A combination of one or many Front-Ends and zero or many other additional HW/SW units (e.g. peripheral devices like a microphone). The various parts can be either directly cabled or wirelessly connected together, so as to provide IMB subscribers with an integrated unit, which leverages the functionality of each of its components and the synergies that can be established among them. |
| **Front-End Set (FS) 10** | A uniquely identified logical -grouping of Front-Ends, configured by an IMB subscriber so as to instruct the IMB System how to properly reach her/him. Front-Ends are ordered per priority. |
| **Front-End Set Template (FST) 11** | A predefined FS published by an organization through an EGS. FST can be automatically prepared by the EGS or manually assembled by the EGS administrator. In the former case, for a given set of Front-Ends the EGS can prepare multiple FSTs, each featuring a unique ordering scheme. Each FST, like normal FS, is assigned a unique identifier. One of the FST shall be considered as the default one (again, either algorithmically or manually). |
| **Virtual Front-End Set (VFS) 12** | Combination of one or more Front-Ends and/or one or more Virtual Front-Ends. The information concerning this type of FS is either available as published by an EGS and/or automatically gathered by performing Device and/or Service Discovery. The VFS is a (purely logical) specialization of the FS concept. |

The following paragraphs describe the present invention by following the ODP methodology as a guideline. More specifically, the five ODP viewpoints (listed below) are hereby used in an informal way:
1. enterprise (use cases - requirements from a customer perspective)
2. information (structure of the information managed by the system)
3. computational (system functionality)
4. engineering (mechanisms implementing the system functionality and providing distribution transparencies)
5. technology (technical solutions used for achieving the goals of the aforementioned viewpoints).

### Enterprise viewpoint

### Purpose:

The hereby-described system is part of a service that enables mobile users to get fast access to services and resources located in the surroundings. The incorporation of the resources is further simplified by providing service-specific templates describing preferred ways to use the local services. Nevertheless, the templates can be further tailored to the users' needs.

Another advantage of this invention is that it allows devices that cannot participate in a device and service discovery process, to be included into the service template. Another advantageous aspect of this invention enables the user to use not only the home service, but also the services of a visited network.

This invention focuses on the definition of the client part (the EGSC) of the system, and on the integration of the EGS with an IMB system.

### Example:

Businessmen (who happen to be IMB subscribers), frequently lodging in a given hotel might find convenient to get information (i.e. a FST) about the set of Front-Ends available there, by querying the hotel EGS. To do so, the businessman has simply to discover an EGS (by using the DDM and the SDM), and get a published FST (eventually by choosing one out of many).

The businessman can thus grab the chosen FST from the EGS. In doing so, the businessman first gets a pre-configured template, and second does not have to perform Device Discovery, Service Discovery, Virtual Device Management, and IMB User Profile Database Management.

Once retrieved such information, the businessman can customize it to add any Front-End available at hand (e.g. a mobile phone), and save it. In this way, the businessman can, at a later time, immediately switch FS to the customized one, whenever visiting the given hotel. The *customization* process can consist of any of the following actions (eventually combined together):
- **Add a Front-End description**
- **Remove a Front-End description**
- **Modify a Front-End description** (for example modify certain Front-End attributes, or instruct the system to only send notifications to the Visitor Front-End whenever a message arrives on the given Front-End, e.g. the case of a Fax machine).

Moreover, the businessman can use any VF described in the chosen FST, either as is or integrated with any Visitor Front-End he might have available at hand (e.g. a mobile phone).

Should no EGS be available, a roaming IMB subscriber using an Ad-Hoc Computing Manager (ACM) powered mobile device could use the ACM functionality to discover available Front-Ends in the surrounding and either collect information about them in a fresh new FS, or update a pre-existing FS. Furthermore, by using location information as provided by a Location Manager (if available), IMB subscribers can associate the FS (discovered through the ACM) to the location information. In this way, an IMB subscribers can later retrieve automatically an FS (if any), given her/his current location.

Additional issues are:
- **Security:**
   different levels of security might be enforced. For example, part of or the whole FST information published by an EGS might need to be available only to authorized users (personnel and customers). Each EGS shall decide which FST information shall be publicly available, and which should be secured.
- **Dynamic Configuration:**
   Front-Ends shall be referred to, simply as logical names in the FS. The ACM is thus in charge of resolving the physical addresses on behalf of the IMB system.

As aforementioned, these mechanisms are merely focused at removing as many computing tasks as possible (namely, device discovery, service discovery, and virtual device assembly) from the Front-Ends, which the roaming IMB subscriber might happen to have available at hand.

However, this idea reflects onto the overall IMB system architecture quite noticeably, insofar as the hereby-presented concepts naturally lead to a processing distribution, which efficiently can address IMB service deployment on a worldwide scale. Roaming IMB subscribers can thus leverage not only existing Front-Ends as published by an EGS, but even relay on local IMB systems for their routing needs.

Whenever crossing administrative boundaries (i.e. the IMB subscriber *home service* provider might differ from the *visited* one), proper inter-IMB Service Provider policy provisioning is required (i.e. commercial agreements).

### Scenarios

Following are described possible uses of the hereby-presented functionality. As preliminary step, the IMB subscriber tries to discover an EGS, by using either a public Front-End (e.g. a set top box in a hotel room), or an ACM-enabled Visitor Front-End.
1. Case of EGS available
   1.1 Case of FST customization
   1.2 Case of FST activation
   1.3 Automatic retrieval of a stored customized FST
2. Case of EGS not available
   2.1 Case of LM available: use geo-location information to retrieve associated FS
   2.2 Case of LM not available: perform Device Discovery, Service Discovery, and Virtual Device Composition
3. Case of manual retrieval of a stored FS: bypass any EGS functionality, and manually set as *active* context the FS associated with the discovered EGS.

### Role of the System in the Enterprise

The described system is a support function that allows mobile user to immediately access telecommunications resources in locations the user is visiting.

### Boundaries of the System

The system is a special kind of lookup or directory services targeted at providing service and resource information to mobile users. It does not replace normal directory services for location-transparent accesses. It is further specialized in the sense that it provides service specific templates.

### Information Viewpoint

Substantially, the structure of the information managed by the hereby-presented system coincides with the one described in EP 1130869, the only difference being the templates (FST) offered by the EGS.

These templates are de facto structured as an FS, the only difference being merely of semantic nature. An FST is such, in fact, as long as an IMB subscriber does not use an instance of it. Actually, FST might be parameterized, in order to leave IMB subscribers the freedom to set certain attributes (e.g. physical or logical device addresses). This applies especially (but not exclusively) to VF. The IMB subscriber can also further customize an FST, by selecting only the Front-Ends of choice.

The IMB subscriber can thus save the selected (and eventually customized) FST in her/his User Space in the User Profile Database. The saved FST (which is now de facto an FS) shall be named after the EGS name, as a default name. Should the EGS publish multiple FSTs, the associated names shall be correspondingly used when saving such information (eventually customized) in the User Space.

Should geo-location information be available rather than EGS support, the saved FS shall be named with a mnemonic associated with the given geo-location.

In both cases, the FS name is used for later retrieval.

### The EGS Representation in the Information Model

Each EGS is configured in the User Profile Database as a *gateway.* As such, it simply represents an FST container. Once obtained and customized an FST by an EGS, the IMB subscriber can store it in her/his User Space in the User Profile Database. This is a typical copy-and-paste process: the information is copied from the original FST (which is not modified) into the User Space, where it can be later modified (if necessary).

As an exception, the information about certain shared Front-Ends (e.g. a fax machine) might be simply referenced, so that any later change concerning such Front-Ends automatically propagates to all the FS pasted from the FSTs, the given Front-Ends belong to.

### Cached Front-End Information

In the case of Front-End addition to an FST, the corresponding Front-End information should be already available in electronic format, in order to speed up the customization process.

As it will be explained in the following paragraphs, this might not be possible: this type of information is in fact stored in the User Profile Database, which might be not reachable at a given time. For example, the roaming IMB subscriber might be in a location where her/his Home IMB System is not reachable.

In order to cope with such cases, a Front-End compliant with the hereby-described invention, shall store a local copy of the information describing its capabilities. The IMB subscriber originally creates this Front-End information by customizing a template, and then saves the result both in the User Profile Database and in a Front-End *cache* (with the same format as used in the User Profile Database). Such cached Front-End information shall be maintained consistent with the one stored in such a database.

Therefore, whenever returning within their HIS coverage area, roaming IMB subscribers shall made consistent the cached information contained in their Front-Ends, with the one stored in the HIS User Profile Database.

### Finer-Grained EGS Information

The EGS can also provide additional low-level information, concerning the description of any detected (or manually configured) network, on which the published Front-Ends are connected. This information is structured according to the Virtual Device Manager specification described in European patent application 99 124 216.5.

### Computational Viewpoint

### The EGS Functionality

The EGS can be programmed so as to either publish a configured, fixed network, or monitor the surroundings (looking for any added, removed, or updated Front-End), by using the ACM functionality. In the latter case, network composition changes are immediately reflected onto the corresponding FST information stored in the User Profile Database. Network topology changes are also tracked.

Notifications are then sent to all the roaming IMB subscribers' Visitor Front-End (if any is available), indicating that a change has occurred. This notification process thus implies human intervention, insofar as the IMB subscriber may accept or not the given chance (e.g. new discovered - *added* -Front-Ends might not be of any interest to the IMB subscriber, who would then not include them into her/his User Space).

### Home and Visitor IMB System

It might be necessary to distinguish the IMB system effectively used by the roaming IMB subscriber at any given time. The system may coincide with the one the subscriber is normally registered with, or it might differ. This difference may be due to IMB system deployment reasons (i.e. geographical distribution of the various system components), or to administrative reasons (i.e. the subscriber reaches a location where her/his IMB Service Provider coverage is not available).

It is therefore reasonable to identify two types of IMB system: the Home IMB System (HIS), which coincides with the one the subscriber originally registered with; and the Visitor IMB System (VIS), for all other cases.

Whenever detecting an EGS, the Visitor can try to contact her/his HIS: if this is not reachable, or if the cost for reaching the HIS is prohibitive, a VIS must be used.

In the former case, the IMB subscriber will get a temporary account at the local VIS, provided that the organizations managing the HIS and the VIS either coincide or share a commercial agreement for addressing accounting issues.

In the latter case, the IMB subscriber will still get a temporary account at the local VIS, but will also be able to inform the HIS that she/he is currently located at the VIS. In this way, the HIS can redirect any Instant Message (which other IMB subscribers, located within the HIS coverage area, might send to the roaming one) to the FS specified in the VIS. This redirection mechanism requires a preventive commercial agreement between the organizations managing the two systems.

The use of a VIS is exceptional, being limited only to those cases where a direct connection to the HIS from a given location might be either impossible, or not reliable, or simply too expensive. Any IMB system can, at any given time, act as either a HIS, a VIS, or both. Whenever acting as a VIS, the IMB system uses a separate User Profile Database partition (or even a separate full-blown Database), for storing guest accounts.

The same rationale applies to the case of no EGS support, and usage of geo-location information, as provided by the LM.

### EGS Operative Modes

The EGS can be used in various manners. Three possible *modes* are envisioned:
**1. Fully automatic:** uses the (default) FST as published by the EGS, without human intervention. By simply creating in proximity of an EGS, the roaming IMB subscriber gets her/his User Space automatically updated so as to use the FST published by the given EGS. This mode can be used in order to immediately take advantage of any shared Front-End available in the surroundings (e.g. a fax machine)
**2. Arbitrated:** based on information *(constraints)* provided by the roaming IMB subscriber, the EGS automatically selects the FST (out of the possible many published by the EGS), which meets such constraints. Three sub-modes are possible:
   **2.1. Front-End-based:** the arbitration is completely performed by the Front-End itself.
   **2.2. EGS-based:** the arbitration is completely performed by the EGS on behalf of the Front-End.
   **2.3. Cooperative:** the arbitration is performed by the Front-End itself, except for certain resource consuming computations, which deal with not sensitive data.
**3. Manual:** the FST selection is carried out exclusively through human intervention. Three sub-modes are possible:
   **3.1. Front-End-based:** the customization is completely carried out by the Front-End itself.
   **3.2. EGS-based:** the customization is completely carried out by the EGS on behalf of the Front-End.
   **3.3. Cooperative:** the customization is carried out by the Front-End itself, except for certain resource consuming, computations, which deal with not sensitive data.

It is envisioned that the Arbitrated and Manual mode will more likely be the most commonly used ones. At this extent, the IMB subscriber may interact with the EGS either through her/his Visitor Front-End, or through any Front-End available in the EGS proximity.

The default mode is the manual one. At any given time, the IMB subscriber can switch among the three aforementioned modes. The newly selected mode will take effect upon the next visit to the given EGS, or upon any environment mutation.

In any case, the notification mechanism supersedes the functionality of any of the aforementioned modes, in the sense that human intervention is always required in that case.

### Validation

Both in the case of FST customization and reuse of previously stored information, care must be taken so as to ensure that such information is consistent with the current status of the mutable environment.

More specifically, one has to ensure that such information is (i) compatible with the set of Front-Ends the IMB subscriber has available in that particular circumstance, and (ii) consistent with the current status of the environment, this information describes.

The former point concerns with VF: predefined information might not be valid when applied to a given Front-End (i.e. in case the Visitor Front-End was not able to interface at a later time with one of the devices, which concur to form the predefined VF). This may happen when trying to use a predefined VF information published within a FST by an EGS, or when retrieving a VFS from the IMB subscriber's User Space.

In such a case, the validation process is accompanied by a reservation one: if the advertised VF template contained in the FST is compatible with the Visitor Front-End(s), the bundled resources (e.g. a microphone, an overhead projector, etc.) are automatically reserved to the given Visitor Front-End. The reservation policy may vary, depending on the type of resource (e.g. exclusive access as in the case of a microphone, with or without authorization control through an Access Control List - ACL), and subject to a lease-based mechanism, so as to avoid that a partial failure could cause overall starvation problems.

Similar reservation mechanisms take also place whenever a predefined VF is used as is.

The latter point (i.e. validating FST consistency with respect to current environment status) deals with the intrinsic mutability of the environment. The FST may in fact reflect an old configuration of Front-Ends, which is no longer consistent with the current one (i.e. Front-Ends can have been added, removed, or changed since the last time the FST was created and/or updated).

These issues call for a preliminary verification phase (validation), which shall take place as soon as an FST or VFS is retrieved from the User Space, or the very first time an FST containing VF template information has been obtained by an EGS.

It is an EGS duty to perform the validation process on behalf of the roaming IMB subscriber, the reason being to alleviate from resource demanding tasks the user's (most likely *portable*) Visitor Front-End.

### User Space Updates

Any user space update can be carried out by the EGS over the User Profile Database controlled by the VIS. Alternatively, the IMB subscriber can do the same thing by using the Visitor Front-End (e.g. manual- or geo-location -based FS retrieval).

### Scenarios

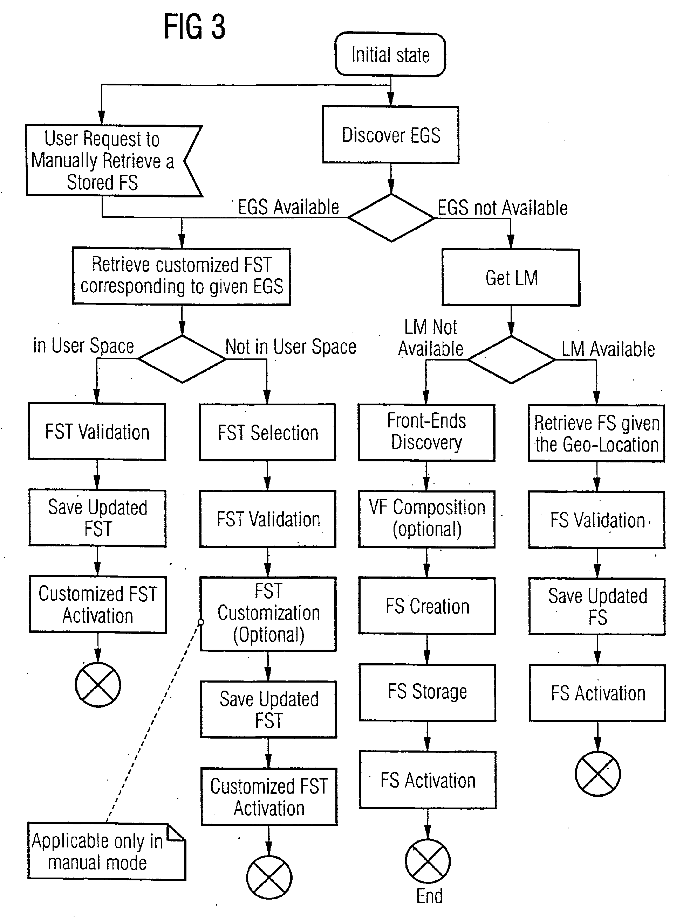

For simplicity, security issues are implicitly taken into account. An overall picture is depicted in Figure 3.

### Case of EGS available: Case of FST customization

1. Select FST in manual mode
2. Validate FST (only if FST contains VF information: in this case, perform resource reservation as well).
3. Customize FST
4. Save customized FST in IMB subscriber's User Space
5. Activate customized FST

### Case of EGS available: Case of FST activation

1. Select FST (either in automatic, arbitrated, or manual mode)
2. Validate FST (only if FST contains VF information: in this case, perform resource reservation as well).
3. Save FST in IMB subscriber's User Space
4. Activate customized FST

### Case of EGS available: Automatic retrieval of a stored customized FST

1. Retrieve customized FST associated with the given EGS from the IMB subscriber's User Space
2. Validate customized FST (in any case)
3. Save customized FST in IMB subscriber's User Space
4. Activate customized FST

### Case of no EGS available: Case of LM available

1. Get geo-location from LM
2. Retrieve FS associated with the given geo-location from the IMB subscriber's User Space
3. Validate FS
4. Save updated FS in IMB subscriber's User Space
5. Activate FS

### Case of EGS not available: Case of LM not available

1. Front-End Discovery
2. Virtual Front-End Composition (optional)
3. Create FS (or VFS if any VF has been assembled)
4. Save FS in IMB subscriber's User Space
5. Activate FS

### Case of manual retrieval of a stored FS

1. Retrieve the user-specified FS (or customized FST) from the IMB subscriber's User Space
2. Validate FS
3. Save updated FS in IMB subscriber's User Space
4. Activate FS

### Engineering Viewpoint

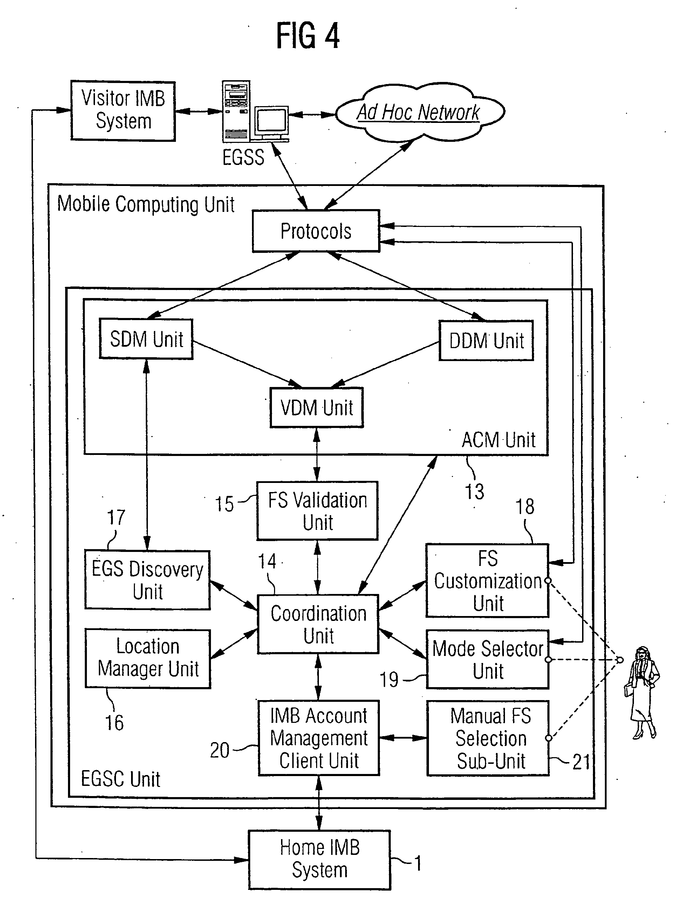

Figure 4 depicts the system architecture of a Visitor Front-End, with respect to the other entities, which concur to provide the functionality described in the present document (namely, the EGS, the HIS, and the VIS). The use of a VIS is exceptional for all those cases where a direct connection to the HIS from a given location might be either impossible, not reliable, or simply too expensive.

The figure shows how the EGS is connected to (and monitors) an Ad-Hoc Network at one side, and to the VIS at the other side.

Internally, the Visitor Front-End (indicated in the figure as *Computing Unit*) features an EGSC unit with several sub-units, each managing a specific task:

| **Unit Name** | **Unit Description** |
|---|---|
| **ACM Unit 13** | The figure offers a simplified internal view of such unit, in terms of the three major functionality that can be effectively used in this context, namely the Device Discovery Manager (DDM) Unit, the Service Discovery Manager (SDM) Unit, and the Virtual Device Manager (VDM) Unit. |
| **Coordination Unit 14** | This Unit provides the control logic that coordinates all the actions required in order to perform the tasks described in the previous paragraphs. This Unit coordinates the following Units: ACM Unit, FS Validation Unit, Location Manager Unit, EGS Discovery Unit, FS Customization Unit, FS Manual Selection Unit, Mode Selector Unit, and IMB Account Management Client Unit. Shall no EGS be available, the Coordination Unit (as default behavior) can use the ACM Unit for monitoring Ad Hoc Networks and eventually assemble a VF. |
| **FS Validation Unit 15** | This Unit performs the validation process, i.e. verifies the compatibility of any VF information contained in a FST, with the Visitor Front-End capabilities. The Unit takes care of resource reservation issues as well. The Unit performs both the VF validation and resource reservation processes by cooperating with VDM Unit. |
| **Location Manager Unit 16** | This Unit provides geo-location information. |
| **EGS Discovery Unit 17** | This Unit looks for any available EGS within the Visitor Front-End coverage area, by cooperating with the SDM. |
| **FS Customization Unit 18** | This Unit provides a GUI, in order to allow the 1MB subscriber to enter customized information into a given FST. The Unit takes then care of performing the corresponding customization. This unit contains a local copy of the information contained in the HIS User Profile Database, concerning the given Front-End. This Unit maintains this local copy consistent with the corresponding information stored in database. |
| **Mode Selector Unit 19** | This Unit acts as a selector of the EGS operative mode and, in the case of arbitrated mode, provides a GUI so as to allow the 1MB subscriber to enter the constraints, which the EGS shall match against its published FSTs. |
| **IMB Account Management Client Unit 20** | This Unit allows direct IMB account information manipulation into the User Profile Database. |
| **FS Manual Selection Sub-Unit 21** | A sub-unit of the IMB Account Management Client Unit. This provides a GUI, in order to allow the IMB subscriber to manually force the system to retrieve a stored FS (eventually a customized FST) from the User Profile Database. |

The Visitor Front-End may communicate directly with HIS for the following reasons:
- notify the HIS about the identity of the freshly joined VIS
- Retrieve a stored FS from the User Profile Database

The EGS communicates with the VIS, which in turn can have a communication link with the HIS for performing the redirection functionality described above.

In the case the roaming EVM subscriber does not have any Visitor Front-End (e.g. a mobile phone) available at hand, the minimum requirement for using the functionality described in this document is to have access to a public ACM-enabled Front-End (e.g. a set top box in a hotel room). This Front-End must be compliant with the hereby-described architecture.

The control whether the current status of the Ad-Hoc Network is consistent with any FS information retrieved from the User Profile Database is demanded to the EGS, for performance reasons. Any eventual inconsistencies will be immediately notified to the IMB subscriber, leaving her/him the decision whether to accept the change or not.

### Technology Viewpoint

This invention articulates in a set of Units, which can be fully implemented as Software Units (SW *Components*).

It is advantageous that the SW Units feature a platform independent nature, given that the IMB architecture is open to any possible HW/SW implementation of its internal components and of the Front-Ends.

It is advantageous that the Units be easily deployable (possibly over a telecommunication network, e.g. over the Internet) and easily (re)configurable. It is advantageous that the units can be downloaded, installed or upgraded over the network.

For these and other many other reasons, it is advantageous the use of the Java-based MASE middle-ware as the platform of choice. In such a context, the Units above described are de facto MASE Components. As such, each Unit provides an API specification, and its implementation.

Moreover, certain Units provide also a GUI for addressing MMI requirements. Examples are: the Mode Selector Unit

The EGS can be also implemented according to the MASE architecture.

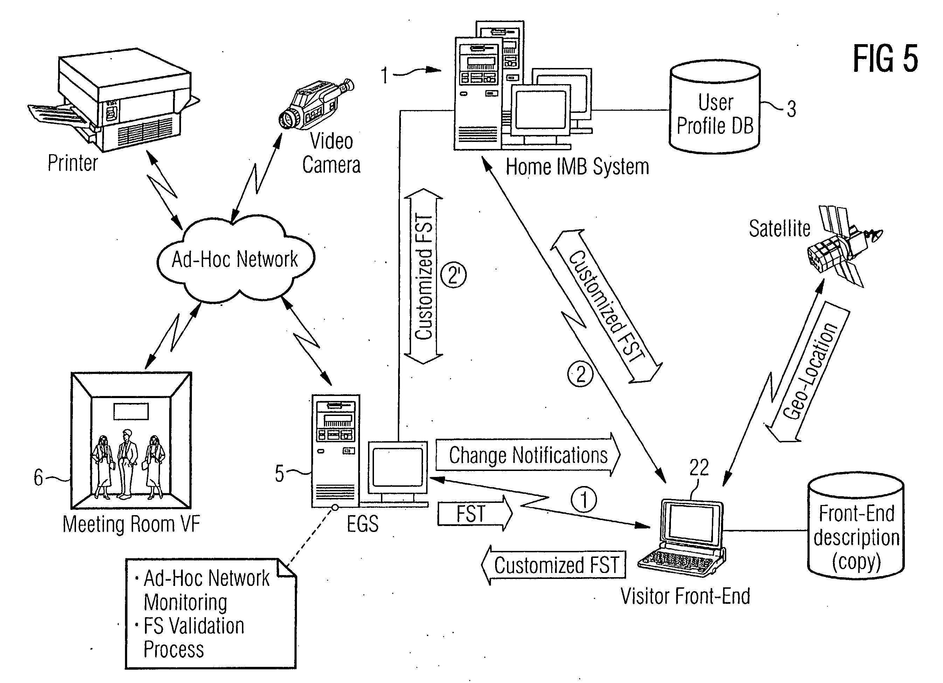

Figure 5 summarizes most of the concepts hereby presented. For the sake of simplicity, the visualization of Instant Message data flow among the Visitor Front-End 22 and the IMB system 1 has been omitted.

The first phase is the EGS detection: once discovered an EGS, the IMB subscriber can either select manually one of the FST published by the given EGS 5 (manual mode), or let the latter automatically set-up a new FS on behalf of the subscriber (arbitrated or automatic mode).

Should the EGS 5 be not available, the roaming IMB subscriber has three options: (i) use the HIS as usual, (ii) use the ACM for discovering the Ad-Hoc Network configuration, or (iii) try to see whether any FS, associated with the given geo-location, is available in her/his User Space.

The figure clearly indicates that the EGS main functionality is to: (i) monitor the environment and identify any Ad-Hoc Network available there, (ii) advertise such information to Visitor Front-Ends, (iii) perform the FS validation task, and (iv) access the HIS User Profile Database on behalf of the roaming IMB subscriber. In the latter case, the EGS saves and/or retrieves data (namely, FS information) from the User Space. The Visitor Front-End has however the option to directly perform the latter step, without EGS support.

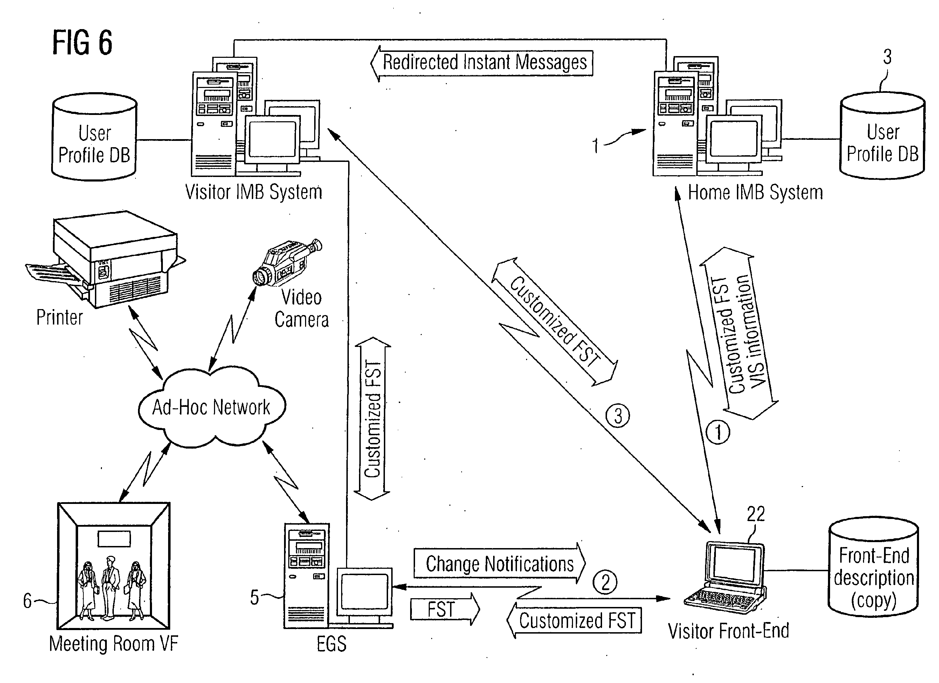

Figure 6 summarizes most of the concepts hereby presented. This figure differs from Figure 5 insofar as it presents a situation where the HIS might not be reachable (either for physical or for economic reasons), and thus VIS support is required. For the sake of simplicity, the visualization of Instant Message data flow among the Visitor Front-End and the HIS and/or VIS has been omitted. Analogously, geo-location -based FS retrieval is not indicated in this figure.

The first phase is the EGS detection: once discovered an EGS, the IMB subscriber can either select manually one of the FST published by the given EGS (manual mode), or let the latter automatically set-up a new FS on behalf of the subscriber (arbitrated or automatic mode).

Should the EGS be not available, the roaming IMB subscriber has three options: (i) use the HIS as usual, (ii) use the ACM for discovering the Ad-Hoc Network configuration, or (iii) try to see whether any FS, associated with the given geo-location, is available in her/his User Space.

The figure clearly indicates that the EGS main functionality is to (i) monitor the environment and identify any Ad-Hoc Network available there, (ii) advertise such information to Visitor Front-End, (iii) perform FS validation tasks, and (iv) access the VIS User Profile Database on behalf of the roaming IMB subscriber. In the latter case, the EGS saves and/or retrieves data (namely, FS information) from the User Space. The Visitor Front-End has however the option to directly perform the latter step, without EGS support (by contacting either the HIS or, alternatively, the VIS).

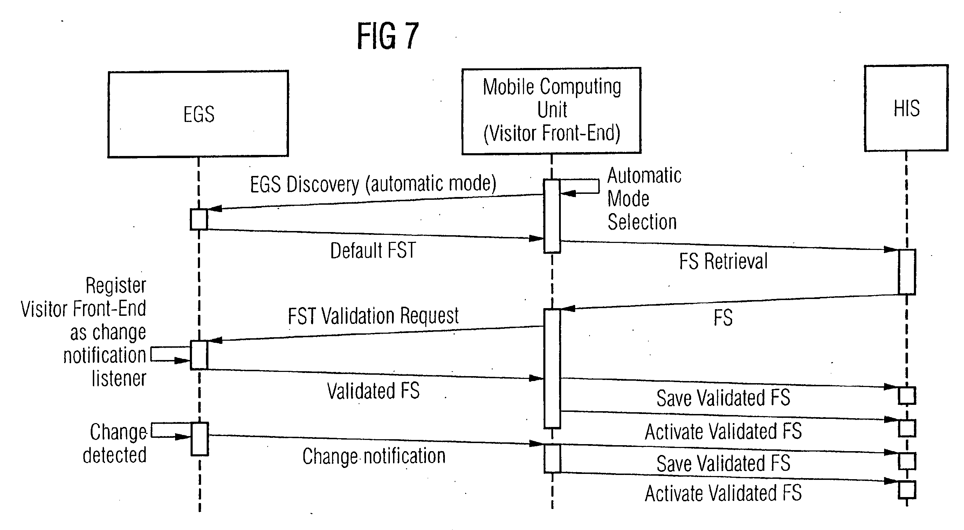

Figure 7 represents the information flow among the EGS, the Visitor Front-End, and the HIS, in the case of automatic mode, with direct HIS support. This case deals with a pre-stored copy of the given FST available in the User Space. Alternatively, the Visitor Front-End can perform the validation by itself.

Once completed the validation process, the EGS automatically registers the given Visitor Front-End as network change notification listener, so as to send to the Visitor Front-End at a later time, notifications about any detected network change (e.g. topology changes in a Mobile Ah-Hoc Network).

Alternatively, the EGS can communicate with the HIS (or VIS) on behalf of the Visitor Front-End.

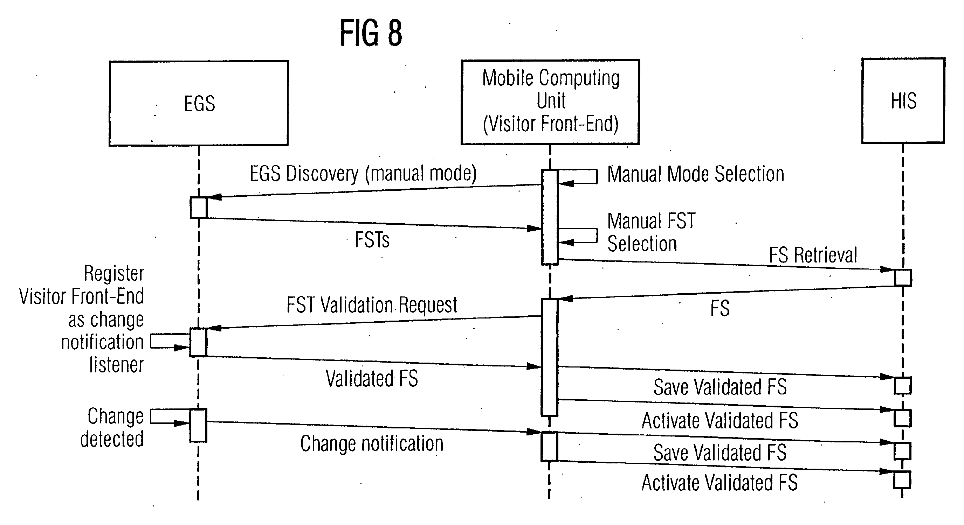

Figure 8 represents the information flow among the EGS, the Visitor Front-End, and the HIS, in the case of manual mode, with direct HIS support and no customization. This case deals with a pre-stored copy of the given FST available in the User Space. Alternatively, the Visitor Front-End can perform the validation by itself.

Once completed the validation process, the EGS automatically registers the given Visitor Front-End as network change notification listener, so as to send to the Visitor Front-End at a later time, notifications about any detected network change (e.g. topology changes in a Mobile Ah-Hoc Network).

Alternatively, the EGS can communicate with the HIS (or VIS) on behalf of the Visitor Front-End.

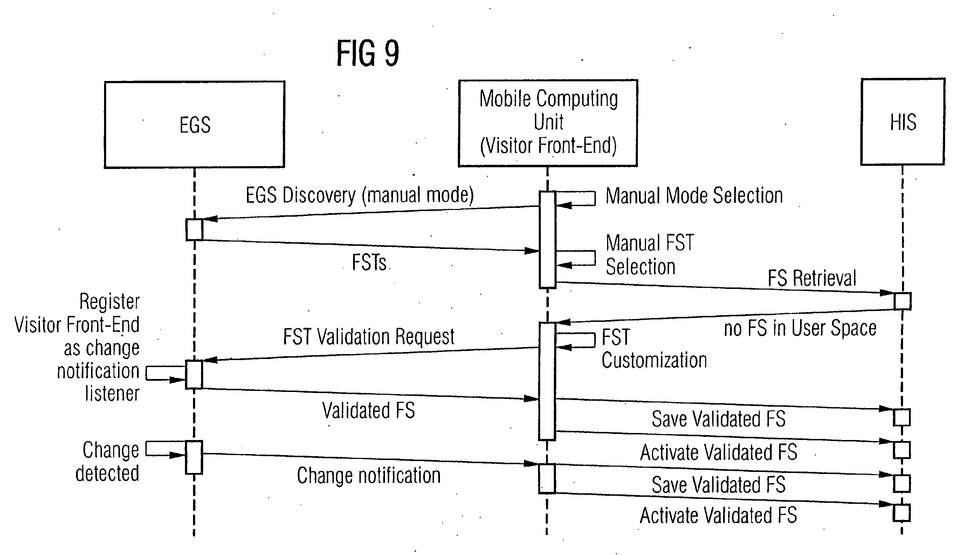

Figure 9 represents the information flow among the EGS, the Visitor Front-End, and the HIS, in the case of manual mode, with direct HIS support and customization. This case deals with a pre-stored copy of the given FST available in the User Space.

Once completed the validation process, the EGS automatically registers the given Visitor Front-End as network change notification listener, so as to send to the Visitor Front-End at a later time, notifications about any detected network change (e.g. topology changes in a Mobile Ah-Hoc Network).

Alternatively, the EGS can communicate with the HIS (or VIS) on behalf of the Visitor Front-End.

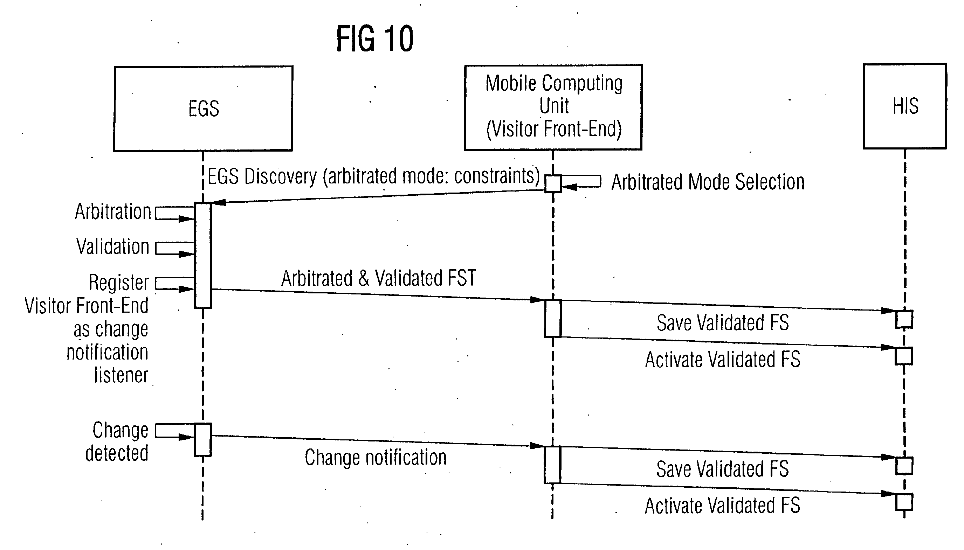

Figure 10 represents the information flow among the EGS, the Visitor Front-End, and the HIS, in the case of arbitrated mode, with direct HIS support. Alternatively, the Visitor Front-End can perform the arbitration and/or validation by itself.

Once completed the validation process, the EGS automatically registers the given Visitor Front-End as network change notification listener, so as to send to the Visitor Front-End at a later time, notifications about any detected network change (e.g. topology changes in a Mobile Ah-Hoc Network).

Alternatively, the EGS can communicate with the HIS (or VIS) on behalf of the Visitor Front-End.

This invention *generalizes* the IMB concept by dealing with a *mutable* environment rather than the static one addressed by the original IMB invention.

In a *mutable* environment the context, in which the user interacts with the IMB system, can change over time.

This invention focuses therefore on yet another aspect of environment mutability, not covered by the aforementioned patents: the ad-hoc leveraging of networked telecommunication and/or multimedia resources that might be available in the surroundings.

Even though presented in the context of the IMB service, this invention might be applied, *mutanda mutandis*, to other network services as well.

Furthermore, compared to the internal state of the art, this invention describes a new IMB feature: the notification mechanism, which informs an IMB subscriber about the arrival of an Instant Message at a certain Front-End (e.g. a fax machine).

## Claims

1. Method for discovering local resources of a network,
comprising the steps of:
- providing at least one predefined template (11) to at least one entry gateway server (5) of a network, the template (11) being a predefined information on a logical grouping of front-ends (10) offered to the user in the environment of the entry gateway server (5), and
- transmitting the template (11) from the entry gateway server (5) to a user device, and
- customizing the template (11) by the user **characterized by** the steps of:
storing the template (11) in a central user profile database (3), wherein the template (11) is customized by adding and/or deleting front-ends.

2. Method according to anyone of the preceding claims,
**characterized in that**
the template (11) can be cached locally in the user's device.

3. Method according to claim 2,
**characterized in that**
the locally cached customized templates can be synchronized with templates stored on the central user profile database (3).

4. Method according to anyone of the preceding claims,
**characterized in that**
the template (11) is specific for a given service and contains information on the use of locally available resources.

5. Method according to anyone of the preceding claims,
**characterized in that**
the template (11) contains information on locally available front-ends which may even not been able to participate in a direct resource discovery process.

6. Method according to anyone of the preceding claims,
**characterized in that**
the templates (11) are offered by a entry gateway server (5) of a message transmission service.

7. Method according to anyone of the preceding claims,
**characterized in that**
the entry gateway-server (5) automatically sends a notification to the user's device in case front-ends of a template (11) are modified.

8. A computer software program product,
adapted to implement a method according to anyone of the preceding claims when executed on a networked computing device.

9. A system for discovering local network resources, comprising
- an entry gateway server (5) that has at least one predefined template (11), the template (11) being a predefined information on a logical grouping of front-end (10) offered to the user in the environment of the entry gateway server (5), wherein the entry gateway server (5) is adapted to transmit the template (11) to a user device,
**characterized by**
- a central user profile data base (3) having stored the template (11) that has been previously customized by the user,
wherein the template (11) is customized by adding and/or deleting front-ends.

10. Entry gateway server according to claim 9,
**characterized in that**
the template (11) can be cached locally the user's device.

11. Entry gateway server according to claim 10,
**characterized in that**
the locally cached customized templates can be synchronized with templates stored on the central user profile database (3).

12. Entry gateway server according to claim 11,
**characterized in that**
the template (11) is specific for a given service and contains information on the use of locally available resources.

13. Entry gateway server according to anyone of claims 9 to 12,
**characterized in that**
the template (11) contains information on locally available front-ends which may even not been able to participate in a direct resource discovery process.

14. Entry gateway server according to anyone of claims 9 to claim 13,
**characterized in that**
it automatically sends a notification to the user's device in case front-ends of a template (11) are modified.

## Patentansprüche

1. Verfahren zum Aufspüren lokaler Netzwerkressourcen,
aufweisend die Schritte zum:
- Bereitstellen wenigstens einer vordefinierten Dokumentenvorlage (11) an wenigstens einen Eingangs-Server (5) eines Netzwerkes, wobei die Dokumentenvorlage (11) eine vordefinierte Information für eine logische Gruppe von Front-End-Schnittstellen (10) ist, die einem Benutzer in der Umgebung des Eingangs-Servers (5) angeboten sind, und
- Übertragen der Dokumentenvorlage (11) von dem Eingangs-Server (5) zu einer Benutzervorrichtung, und
- individuellen Anpassen der Dokumentenvorlage (11) durch den Benutzer, **gekennzeichnet durch** die Schritte zum:
Speichern der Dokumentenvorlage (11) in einer zentralen Benutzerprofil-Datenbank (3), wobei die Dokumentenvorlage (11) **durch** Hinzufügen und/oder Entfernen von Front-End-Schnittstellen individualisiert ist.

2. Verfahren nach einem der vorhergehenden Ansprüche,
**dadurch gekennzeichnet, dass**
die Dokumentenvorlage (11) lokal in der Benutzervorrichtung in den Cache-Speicher aufgenommen sein kann.

3. Verfahren nach Anspruch 2,
**dadurch gekennzeichnet, dass**
die lokal im Cache-Speicher aufgenommenen individualisierten Dokumentenvorlagen mit den in der zentralen Benutzerprofil-Datenbank (3) gespeicherten Dokumentenvorlagen synchronisiert sein können.

4. Verfahren nach einem der vorhergehenden Ansprüche,
**dadurch gekennzeichnet, dass**
die Dokumentenvorlage (11) für einen gegebenen Dienst spezifisch ist und Informationen über die Benutzung lokal verfügbarer Ressourcen enthält.

5. Verfahren nach einem der vorhergehenden Ansprüche,
**dadurch gekennzeichnet, dass**
die Dokumentenvorlage (11) Informationen über lokal verfügbare Front-End-Schnittstellen enthält, welche sogar nicht in der Lage sind, an einem direkten Ressourcen-Entdeckungsprozess beteiligt zu sein.

6. Verfahren nach einem der vorhergehenden Ansprüche,
**dadurch gekennzeichnet, dass**
die Dokumentenvorlagen (11) durch einen Eingangs-Server (5) eines Nachrichtenübertragungsdienstes angeboten sind.

7. Verfahren nach einem der vorhergehenden Ansprüche,
**dadurch gekennzeichnet, dass**
der Eingangs-Server (5) automatisch eine Benachrichtigung in dem Fall an die Benutzervorrichtung sendet, wenn die Front-End-Schnittstellen einer Dokumentenvorlage (11) modifiziert worden sind.

8. Computer-Software-Programm-Produkt,
welches angepasst ist, ein Verfahren entsprechend einem der vorhergehenden Ansprüche umzusetzen, wenn es in einer netzwerkbetriebenen Rechnervorrichtung ausgeführt wird.

9. System zum Aufspüren lokaler Netzwerkressourcen, aufweisend
- einen Eingangs-Server (5), der wenigstens eine vordefinierte Dokumentenvorlage (11) aufweist, wobei die Dokumentenvorlage (11) eine vordefinierte Information für eine logische Gruppe von Front-End-Schnittstellen (10) ist, die einem Benutzer in der Umgebung des Eingangs-Servers (5) angeboten sind, wobei der Eingangs-Server (5) angepasst ist, die Dokumentenvorlage (11) an eine Benutzervorrichtung zu übertragen,
**gekennzeichnet durch**
- eine zentrale Benutzerprofil-Datenbank (3) mit gespeicherter Dokumentenvorlage (11), die zuvor **durch** den Benutzer individualisiert worden ist,
wobei die Dokumentenvorlage (11) **durch** Hinzufügen und/oder Entfernen von Front-End-Schnittstellen individualisiert ist.

10. Eingangs-Server nach Anspruch 9,
**dadurch gekennzeichnet, dass**
die Dokumentenvorlage (11) lokal in der Benutzervorrichtung in den Cache-Speicher aufgenommen sein kann.

11. Eingangs-Server nach Anspruch 10,
**dadurch gekennzeichnet, dass**
die lokal im Cache-Speicher aufgenommenen individualisierten Dokumentenvorlagen mit den in der zentralen Benutzerprofil-Datenbank (3) gespeicherten Dokumentenvorlagen synchronisiert sein können.

12. Eingangs-Server nach Anspruch 11,
**dadurch gekennzeichnet, dass**
die Dokumentenvorlage (11) für einen gegebenen Dienst spezifisch ist und Informationen über die Benutzung lokal verfügbarer Ressourcen enthält.

13. Eingangs-Server nach einem der Ansprüche 9 bis 12,
**dadurch gekennzeichnet, dass**
die Dokumentenvorlage (11) Informationen über lokal verfügbare Front-End-Schnittstellen enthält, welche sogar nicht in der Lage sind, an einem direkten Ressourcen-Entdeckungsprozess beteiligt zu sein.

14. Eingangs-Server nach einem der Ansprüche 9 bis 13,
**dadurch gekennzeichnet, dass**
er automatisch eine Benachrichtigung in dem Fall an die Benutzervorrichtung sendet, wenn die Front-End-Schnittstellen einer Dokumentenvorlage (11) modifiziert worden sind.

## Revendications

1. Procédé pour découvrir les ressources locales dans un réseau, comportant les étapes consistant à :
- fournir au moins un modèle prédéfini (11) à au moins un serveur passerelle d'entrée (5) d'un réseau, le modèle (11) étant une information prédéfinie concernant un groupement logique de frontaux (10) offerts à l'utilisateur dans l'environnement du serveur passerelle d'entrée (5), et
- transmettre le modèle (11) du serveur passerelle d'entrée (5) à un dispositif utilisateur, et
- personnaliser le modèle (11) par l'utilisateur **caractérisé par** les étapes consistant à :
mémoriser le modèle (11) dans une base de données de profil utilisateur centrale (3), où le modèle (11) est personnalisé en ajoutant et/ou en supprimant des frontaux.

2. Procédé selon l'une quelconque des revendications précédentes, **caractérisé en ce que** le modèle (11) peut être mis en cache localement dans le dispositif utilisateur.

3. Procédé selon la revendication 2, **caractérisé en ce que** les modèles personnalisés mis en cache localement peuvent être synchronisés avec les modèles mémorisés dans la base de données de profil utilisateur centrale (3).

4. Procédé selon l'une quelconque des revendications précédentes, **caractérisé en ce que** le modèle (11) est spécifique pour un service donné et contient une information concernant l'utilisation des ressources disponibles localement.

5. Procédé selon l'une quelconque des revendications précédentes, **caractérisé en ce que** le modèle (11) contient une information concernant les frontaux disponibles localement qui peuvent ne pas participer à un processus de découverte de ressources directes.

6. Procédé selon l'une quelconque de revendications précédentes, **caractérisé en ce que** les modèles (11) sont offerts par un serveur passerelle d'entrée (5) d'un service de transmission de messages.

7. Procédé selon l'une quelconque des revendications précédentes, **caractérisé en ce que** le serveur passerelle d'entrée (5) envoie automatiquement une notification au dispositif d'utilisateur dans le cas où les frontaux d'un modèle (11) sont modifiés.

8. Produit de programme logiciel informatique, adapté pour implémenter un procédé selon l'une quelconque des revendications précédentes lors d'une exécution dans un dispositif informatique en réseau.

9. Système pour découvrir les ressources locales dans un réseau, comportant
- un serveur passerelle d'entrée (5) qui présente au moins un modèle prédéfini (11), le modèle (11) étant une information prédéfinie concernant un groupement logique de frontaux (10) offerts à l'utilisateur dans l'environnement du serveur passerelle d'entrée (5), dans lequel le serveur passerelle d'entrée (5) est adapté pour transmettre le modèle (11) à un dispositif utilisateur, **caractérisé par**
- une base de données de profil utilisateur centrale (3) ayant mémorisé le modèle (11) qui a été préalablement personnalisé par l'utilisateur,
dans lequel le modèle (11) est personnalisé en ajoutant et/ou en supprimant des frontaux.

10. Serveur passerelle d'entrée selon la revendication 9, **caractérisé en ce que** le modèle (11) peut être mis en cache localement dans le dispositif d'utilisateur.

11. Serveur passerelle d'entrée selon la revendication 10, **caractérisé en ce que** les modèles personnalisés mis en cache localement peuvent être synchronisés avec des modèles mémorisés dans la base de données de profil utilisateur centrale (3).

12. Serveur passerelle d'entrée selon la revendication 11, **caractérisé en ce que** le modèle (11) est spécifique pour un service donné et contient une information concernant l'utilisation des ressources disponibles localement.

13. Serveur passerelle d'entrée selon l'une quelconque des revendications 9 à 12, **caractérisé en ce que** le modèle (11) contient une information concernant les frontaux disponibles localement qui peuvent ne pas participer au processus de découverte de ressources directes.

14. Serveur passerelle d'entrée selon l'une quelconque des revendications 9 à 13, **caractérisé en ce qu'**il envoie automatiquement une notification au dispositif d'utilisateur dans le cas où les frontaux d'un modèle (11) sont modifiés.
